Europäisches Patentamt

European Patent Office

Office européen des brevets

(11) Publication number: **0 398 848 A1**

## EUROPEAN PATENT APPLICATION

(21) Application number: **90830201.1**

(22) Date of filing: **08.05.90**

(51) Int. Cl.5: **B60T 7/08, G05G 5/14**

(30) Priority: **18.05.89 IT 5309589 U**

(43) Date of publication of application:
**22.11.90 Bulletin 90/47**

(84) Designated Contracting States:
**AT CH DE ES FR GB LI**

(71) Applicant: **SAME S.p.A.**
**Viale F. Cassani, 14**
**I-24047 Treviglio Bergamo(IT)**

(72) Inventor: **Palestra, Siro**
**Via Cimabue 4**
**I-20148 Milano(IT)**

(74) Representative: **Buzzi, Franco et al**
**c/o Jacobacci-Casetta & Perani S.p.A. Via
Alfieri, 17**
**I-10121 Torino(IT)**

(54) **A hand brake control for tractors with reversible driving position.**

(57) A hand-brake lever (5) for tractors with reversible driving position (1), whose handgrip (6) has an anatomical shape (7,8,14) adapted to assist gripping in a normal position, corresponding to the forward driving position, and also in an opposite position, corresponding to the reverse driving position. The grip has two oppositely-positioned push buttons (11,15) one operable in each gripping position for releasing the device which retains the lever (5) in the braking position.

FIG. 3

EP 0 398 848 A1

The present invention relates generally to tractors with reversible driving positions, of the type generally described and illustrated in European patent application No. EP-88830437.5 by the same Applicant, and more particularly concerns a hand-brake control for such tractors.

The hand-brake control conventionally comprises a lever which is pivoted about a horizontal articulation axis and which has an associated releasable device for retaining the lever in the braking position, and a handgrip situated at the operating end of the lever and carrying a forwardly-projecting, sprung push-button for releasing the retaining device. The operation of the lever controls the actuation of the parking or emergency brake.

In the case of tractors with reversible driving positions, that is, with two driving and control units at the front and at the rear respectively, the safety regulations prescribe that the basic controls should be operable by the driver safely, directly, and in an identical manner both during normal driving and during driving in reverse. In practice, this results in a need to duplicate the basic controls: in the case of the hand-brake lever, this is necessitated by the fact that it is impossible for a conventional lever, arranged to be operated during normal forward driving to be operated correctly during driving in reverse. This impossibility results, on the one hand from difficulty of grasping the handgrip which is normally shaped according to the gripping anatomy of the driver's hand during forward travel and is therefore unsuitable for the gripping anatomy of the hand during reverse travel, and also from the fact that it is impossible to operate the release push-button with the thumb of the hand in the reverse-travel position.

This forces manufacturers to provide two separate operating levers arranged in opposite configurations, one for operation during normal travel and the other for reverse travel. This causes considerable structural complications and problems in assembly, as well as problems of space in the driving position.

The object of the present invention is to avoid the above problems and to provide a hand-brake control for tractors with reversible driving positions of the type defined above, which is constituted by a single lever which is operable in an identical manner and equally well in the normal driving position and in the reverse driving position.

According to the invention, this object is achieved by virtue of the fact that the lever handgrip has an anatomical shape which is adapted to assist its gripping in the position opposite that of normal gripping and by virtue of the fact that the grip is provided with a second sprung push-button which projects from the opposite end from the said push-button and which is operable to release the retaining device in the opposite gripping position.

According to a preferred embodiment of the invention, the lever handgrip has a rear shoulder which projects above the lever and carries the second push-button.

The invention will now be described in detail with reference to the appended drawings, provided by way of non-limiting example, in which:

Figure 1 is a schematic vertical section of a reversible driving position for tractors provided with a hand-brake control according to the invention, the position being shown in the configuration corresponding to forward driving of the tractor,

Figure 2 is a view similar to Figure 1 with the position shown in the configuration corresponding to reverse driving of the tractor, and

Figure 3 is a sectional view of the detail indicated by the arrow III in Figure 2, on an enlarged scale.

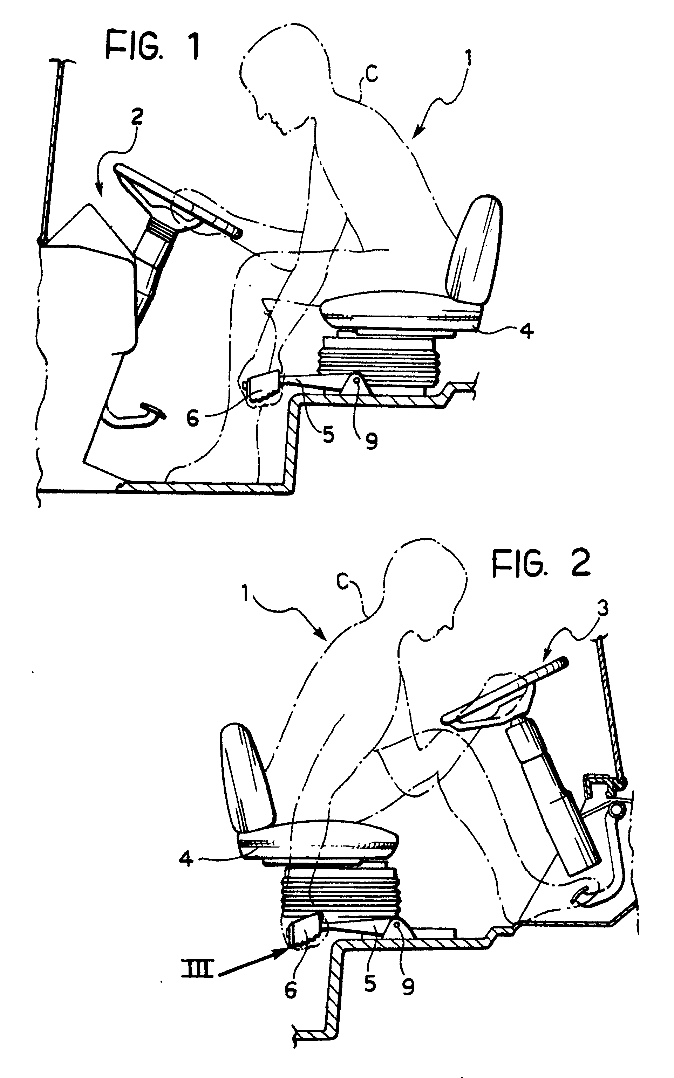

With reference to the drawings, a reversible driving position for tractors, of the type generally known from EP-A-8830437.5, is generally indicated 1. For the purposes of the present invention, it suffices to explain that the position 1 includes two driving and control units, a front unit 2 and a rear unit 3 respectively, between which is situated a seat 4. The seat is rotatable between the position shown in Figure 1 which enables the driver C to drive the tractor forwards by means of the front control and driving unit 2 and the position shown in Figure 2, in which it is rotated through 180° and which enables the tractor to be driven in reverse by means of the rear unit 3.

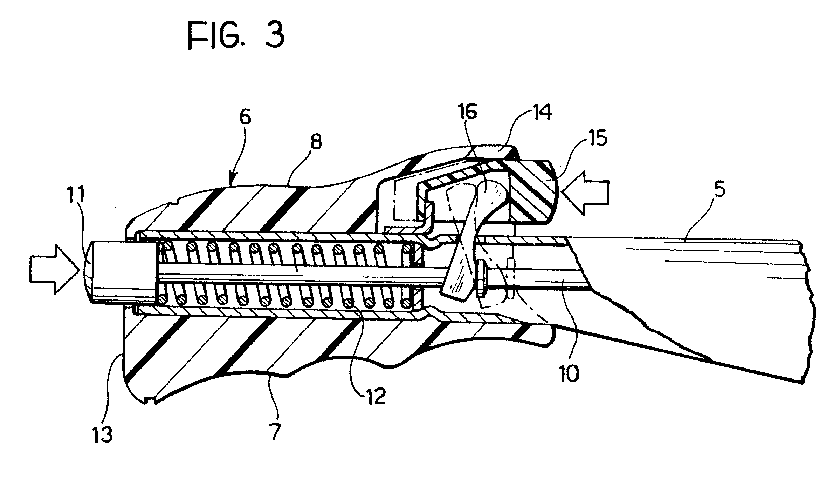

A lever according to the invention for the manual operation of the parking and/or service brakes of the tractor is indicated 5. This lever is formed in the manner which will be explained below, so that it can be operated by the driver C in an identical manner both in the forward driving position of Figure 1 and in the reverse driving position of Figure 2. As shown in greater detail in Figure 3, this is achieved by virtue of the fact that the lever 5 has a grip 6 with an anatomical shape which is adapted to assist its correct gripping in both positions. It, in fact, has a rippled lower surface 7 which can be engaged by the fingers of the driver C in the two opposed positions has an upper surface with a recess 8 for housing the palm of the driver C's hand in both gripping positions.

The lever 5 is articulated, in conventional manner, to the structure of the tractor at the opposite end from the handgrip 6, about a horizontal axis 9 and has an associated ratchet device (not shown) for retaining the lever 5 in the raised braking position. The retaining device is releasable, also in known manner, by means of a rod 10 extending longitudinally within the lever 5 and operable by means of a push-button 11 which projects, under the action of a thrust spring 12, from the front end 13 of the grip 6. This push-button 11 is operable by means of the driver C's thumb in the forward driving position shown in Figure 1.

In order for the retaining device to be released in an identical manner in the reverse driving position of Figure 2, the rear part of the handgrip 6 has a shoulder 14 which projects above the lever 5 and carries a second push-button 15 opposed to the push-button 11. The push-button 15 is connected to the rod 10 by means of a transmission member 16 so as to move it in a manner corresponding to the release of the retaining device against the action of the same spring 12.

## Claims

1. A hand-brake control for tractors with reversible driving positions, comprising a lever which is pivoted about a horizontal articulation axis and which has an associated releasable device for retaining the lever in the braking position, and a handgrip situated at the operating end of the lever and carrying a sprung push-button which projects from the opposite end from the articulation for releasing the retaining device, characterised in that the handgrip (6) has an anatomical shape (7, 8, 14) which is adapted to assist its gripping in the position opposite that of normal gripping, and in that the grip (6) is provided with a second sprung push-button (15) which projects from the opposite end from the push-button (11) and which is operable to release the retaining device in the opposite gripping position.

2. A control according to Claim 1, characterised in that the grip (6) has a rear shoulder (14) which projects above the lever (5) and carries the second push-button (15).

3. A control according to Claim 1 or Claim 2, characterised in that the second push-button (15) and the push button (11) use a single common spring (12).

FIG. 1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | GB-A-1580005 (TYSELEY)<br>* page 1, line 65 - page 2, line 18; figures 1, 2 *<br>--- | 1 | B60T7/08<br>G05G5/14 |
| A | GB-A-1237205 (VAUXHALL)<br>* page 1, line 54 - page 2, line 85; figures 1, 2 *<br>--- | 1 | |
| A | GB-A-1496142 (BENDIX-WESTINGHOUSE)<br>----- | | |

TECHNICAL FIELDS
SEARCHED (Int. Cl.5 )

B60T
G05G
B60N

The present search report has been drawn up for all claims

| Place of search | Date of completion of the search | Examiner |
|---|---|---|
| THE HAGUE | 29 AUGUST 1990 | HARTEVELD C.D.H. |

EPO FORM 1503 03.82 (P0401)